# EUROPEAN PATENT APPLICATION

(11) **EP 4 497 541 A1**
(43) Date of publication of application: **29.01.2025**
(21) Application number: 23188352.1
(22) Date of filing: 28.07.2023
(51) Int. Cl.: B25B 5/14, B60R 9/055, B25B 23/14, B25B 5/10, F16B 31/02

(54) **TORQUE-LIMITING TIGHTENING DEVICE**

(71) Applicant: Neumann, spol. s.r.o., 27302 Tuchlovice (CZ)
(72) Inventor: Masopust, Pavel, 79001 Jesenik (CZ)
(74) Representative: Tomickova, Dana

(57) **Abstract**

The subject-matter of the invention is a torque-limiting tightening device (1) comprising a first part (2) and a second part (3), wherein the second part (3) is rotatably movable relative to the first part (1) about an axis (4) of rotation, wherein the first part (2) comprises a gearing (5) and the second part (3) comprises one or more flexible projections (6) engaging the gearing (5), wherein each tooth (15) of the gearing (5) and/or each flexible projection (6) comprises an inclined surface (16), wherein the torque-limiting tightening device (1) further comprises a spring member (7) for pressing at least one of the flexible projections (6) against the gearing (5), characterized in that the spring member (7) is braced against the first part (2) and the second part (3) for holding the first part (2) and the second part (3) together.

## Description

### Field of the Invention

The invention relates to a torque-limiting tightening device, in particular for manual tightening of threaded joints used in fixing objects on the outer surface of a vehicle, wherein this device for transferring torque from the device to the threaded joint being tightened comprises a spring member and solves the problems associated with attaching the spring member to the parts of the torque-limiting tightening device.

### Background of the Invention

In the current state of the art, torque-limiting tightening devices or similar fastening devices are known, which are used to tighten threaded connections to a predefined tightening torque, wherein these devices often comprise a spring element. Most often, it is a spiral, disk, wave or other spring, which is used for pressing the gearing of individual parts of the device together, wherein the threshold tightening torque of this device may be affected by the force or number of such spring elements.

Document US11351928 B2 describes a manual clamping device with a geared circular plate and a manual rotating cover, where the flexible projections of the rotating cover are arranged on a circle and fit into the geared plate. The maximum tightening torque during tightening is limited by a flexible plate, wherein the flexible plate is mounted over the connecting axis of the clamping device and pressed against the flexible projections of the cover by means of a nut screwed onto the connecting axis. The attaching of the flexible plate with a nut is located in the cavity of the rotating cover and provided with a covering cap.

In another embodiment described in document CN100571991C C, the torque-limiting clamping device comprises two geared co-operating parts and a disk spring assembly, wherein both the geared parts and the disk spring assembly are being housed together with other elements in a common case. The device further comprises a screw cap for closing the case, wherein the spring assembly is pressed against the geared elements by this screw cap of the case. A similar arrangement is disclosed in document EP4094993 A1.

The disadvantage of the above-mentioned arrangements is that the pressure force of the spring element must be ensured by another additional connecting element, which presses this spring element against the geared components of the torque-limiting tightening device. Another disadvantage of removable, e.g., screw connecting elements is that they allow the user to disassemble the spring element from the torque-limiting tightening device and thus interfere with the optimal pressure force of the spring element. Improper handling of the spring element may lead to damage to the correct function of the torque-limiting tightening device, in particular to a reduction of the tightening torque threshold, and thus to damage both the device itself and to damage the threaded connection being tightened.

### Summary of the Invention

The above-mentioned shortcomings are overcome to some extent by the torque-limiting tightening device according to the present invention, wherein the torque-limiting tightening device comprises a first part and a second part, wherein the second part is rotatably movable relative to the first part about an axis of rotation, wherein the first part comprises a gearing and the second part comprises one or more flexible projections engaging the gearing, wherein each tooth of the gearing and/or each flexible projection comprises an inclined surface, wherein the torque-limiting tightening device further comprises a spring member for pressing at least one of the flexible projections against the gearing, wherein the spring member is braced against the first part and the second part for holding the first part and the second part together.

A torque-limiting tightening device is a device for tightening a threaded connection, e.g., a screw connection, wherein this device enables tightening of a threaded connection to a predefined tightening torque by transmitting torque, wherein the tightening torque is a torque used for tightening of this threaded connection. When the defined tightening torque is reached, optimal tightening is achieved, which eliminates the loosening of the threaded connection or, on the contrary, excessive tightening of the threaded connection or its damage. Thus, the first part and the second part of the torque-limiting tightening device represent two cooperating components, wherein the first part and the second part are pressed together, the flexible projections of the second part engage the gearing of the first part, and the second part is rotatable relative to the first part. One part of the pair, the first part - the second part, is attachable to the threaded connection, and other part from this pair is rotatable relative to the part attachable to the threaded connection.

Both the flexible projections of the second part and the gearing of the first part are, e.g., arranged on a circle with the center in the axis of rotation and fit into each other. Each tooth of the gearing may comprise an inclined surface, wherein, during rotation, the first part with the gearing acts as a ratchet allowing rotation of the second part relative to the first part about the axis of rotation in only one direction of rotation. Thus, said inclined surfaces may all point clockwise or all counterclockwise, wherein, in the opposite direction, the teeth may be substantially perpendicular to the direction of rotation so that the teeth on the first part offer less resistance to the flexible projections on the second part in one direction of rotation than in the other direction of rotation. The inclined surface may also be performed on all flexible projections engaging the gearing, e.g., on the free end of the flexible projections. The inclined surface on the teeth of the gearing and/or on the flexible projections serves to push the flexible projection away from the space between the teeth (when rotating in one of the directions, while, when rotating in the other direction, the projection and the teeth abut against each other with areas essentially perpendicular to the direction of rotation, so these projections will not be pushed away). In this second direction, mutual rotation of the parts may be even completely disabled or may require such a large force that some part of the device would be destroyed.

The flexible projections of the second part mean, e.g., cantilever-like projections that are flexible, wherein the flexibility of the flexible projection allows partial deflection of the end of the flexible projection from the plane of the second part between the teeth of the gearing, which occurs when rotating the part and pressing by the spring member. The direction of rotation of the second part relative to the first part is given by the location of the inclination of the teeth, wherein the rotational movement of the second part and the flexible projections between the teeth is enabled in the direction from the base of the inclined surface of the tooth to the highest point of this inclined surface. Therefore, when moving the flexible projection between the individual teeth of the gearing, under normal use (e.g., appropriate speed of manual rotation and appropriate number of cycles) the flexible projection must not break if it is rotated in the direction in which the flexible projection is pressed against the inclined surfaces of the teeth.

The spring element may be, e.g., a spiral spring, a disk spring, a plate spring, a wave spring, or a spring disk, etc., wherein the flexible projections of the second part are pressed against the gearing of the first part by the spring member. The spring member may adjoin the second part at the place of the flexible projections, wherein the spring member thus presses the flexible projections against the gearing directly, i.e., by direct contact of the spring member with the flexible projections. Alternatively, the spring member may press the flexible projections against the gearing indirectly, e.g., via a washer placed between the flexible projections and the spring member. By the type and strength of the spring member, which acts on the flexible projections, it is possible to choose the force of pressure on the flexible projections, and therefore the tightening force or the tightening torque threshold of the entire torque-limiting tightening device.

The spring member is braced against the first part, e.g., by sinking the spring member into the wall of the first part, wherein the second part is thus clamped between the first part and the spring member. The spring member is also simultaneously braced against the second part, as it presses the flexible projections against the gearing. By sinking the spring member into the first part, the second part is clamped between the spring member and the first part, thus the spring member simultaneously connects the first part and the second part and fixes the mutual position of the first part and the second part and the position of the first part and the spring member without the need to use additional connecting elements. The spring member may be braced against the first part along its entire circumference or only along a portion of its circumference, e.g., by an edge. The spring member may comprise an opening, wherein the first part or the second part may comprise an outlet element, where the spring member is mounted over or positioned over to this outlet element via the opening. It is, e.g., the first part comprising a central shank, wherein the spring member may be mounted over the shank through the central opening and braced against the shank.

By bracing the spring member against the first part, the springing of the spring member and the force pressing the flexible projections of the second part to the gearing of the first part are ensured. Preferably, bracing the spring member against the first part is a permanent and non-dismantling connection, which prevents manipulation of the spring member and the creation of insufficient or, conversely, excessive springing of the spring member and damage to the function of the torque-limiting tightening device. Bracing the spring member against the first part and the second part may also be indirect, i.e., the spring member may be braced against the first and the second part through an auxiliary constituent inserted between the spring member and the first part, or between the spring member and the second part. However, direct bracing, which requires a smaller number of components, is preferable.

Bracing the spring member against the first part may also be ensured, e.g., by a force connection performed immediately during assembling of the torque-limiting tightening device, e.g., by pressing the spring member onto the assembly of the first part and the second part. The force connection by pressing consists in the fact that the connected inner part (e.g. the spring member) and the outer part (e.g. the outer wall of the first part) have an overlap, wherein, when the spring member is pressed onto the first part, a notch is created in the outer wall of the first part directly by the spring member into the outer wall and the spring member is firmly sunk into the first part in this notch. This bracing may also be ensured by means of a central opening in the spring member, wherein the diameter of this central opening is smaller than the diameter of the central shank on the first part, wherein by pressing the spring member onto the shank, a notch in the shank is created by the spring member.

Bracing the spring member against the first part may be ensured, e.g., by means of a groove performed in the first part, wherein the spring member is sunk into this groove. The groove may be performed in advance, i.e., before assembling the torque-limiting tightening device, e.g., in the outer wall of the first part. If the first part comprises a shank, a groove may be performed in one or more walls along the circumference of the shank, and the spring member may subsequently be braced into this groove in the shank. Therefore, when assembling the device, the corresponding portion of the spring member is pressed and sunk into the groove. The groove may also be performed directly during assembling of the torque-limiting tightening device, e.g., by pressing a portion of the body volume of the first part with a pressing head, wherein first a spring member is loosely mounted over the assembly of the first part and the second part, and subsequently a pressed collar is formed by the pressing head in one step, wherein a groove with a sunk spring element is bounded by this pressed collar. The groove may be performed along the entire circumference of the relevant portion of the first part or only in selected portions. The advantage is that, by making a groove, the place of bracing the spring member against the first part is precisely determined in advance, and thus also the springing of the spring member.

The portion of the spring member intended to be braced against the first part, i.e., the inner or outer edge of the spring member, may be adapted for easier bracing against the first part, especially by increasing the springiness of this portion of the spring member, which facilitates assembling of the device. An increase in the springiness of this portion of the spring member may be ensured, e.g., by using a different material with lower stiffness or lower rigidity, in the case of a spring member made of one material, it may be achieved by pre-shaping or weakening the structure of this portion of the spring member. Weakening of the structure means, in particular, a change in the thickness of the spring member or the creation of recesses, e.g., in the form of cutouts, openings, perforations, etc. The portion of the spring member intended to be braced against the first part may be partially deformed outside the original plane of the spring member during assembling of the torque-limiting tightening device, namely in the direction against the acting force (e.g., pressing force).

The first and second parts of the torque-limiting tightening device may be made of a thermoplastic, e.g., polyamide, polypropylene or polyethylene, or a composite material, wherein this material may be further reinforced, e.g., by glass or carbon fibers, which increase the stiffness of the product and reduce the shrinkage of the product during production. For torque-limiting tightening devices with higher heat resistance, the first and the second parts may also be made of metal, e.g., aluminum, magnesium, or brass alloys. The metal may preferably be appropriately soft to allow the spring member to be braced during assembling of the device. Only the relevant portion of the part for bracing the spring member may also be made of a softer metal, e.g., it being the coating of the outer wall of the first part or the coating of the shank walls.

Bracing the spring member between both parts in such a way that these parts are held together thereby, in particular so that the spring member pulls or pushes the first part with the second part (or at least some of their portions) together, may be achieved, e.g., in such a way that one of the parts is positioned over another one of the parts, wherein the parts are movable relative to each other after this positioning in only one direction due to their shape. When viewed from side, i.e., perpendicular to the axis of rotation, this other part may exceed the part being positioned in the direction of the axis in both directions. The spring member may then be braced at one end against the protruding portion of this other part and at the other end braced against the part being positioned, which is thus pushed into said other part. The spring member subsequently pushes both parts apart, in a direction opposite to the single said direction, so that the force from the spring element holds both parts together.

The spring member preferably comprises at least one protrusion for bracing against the first part. The protrusion is any portion of the spring member adapted for bracing against the first part, e.g., a point protrusion, a specific portion of the edge of the spring member, etc., wherein the spring member may comprise any number of such protrusions. The advantage of performing the protrusions is that the protrusions of the spring member precisely determine the portion of the spring member for bracing against the first part, wherein they may ensure an increase in the springiness of this portion of the spring member at the same time.

The spring member preferably comprises a total of at least two protrusions for bracing against the first part, wherein the protrusions are regularly arranged along the circumference of the spring member. The circumference of the spring member may be, e.g., the outer circumference of the spring member, and if the spring member comprises a central opening, the circumference may also be the inner circumference of the spring member defined by the central opening. The spring member may comprise protrusions arranged only along the outer circumference, only along the inner circumference, or along both the outer and inner circumference. The standard shape of the outer or inner circumference of the spring member is circular, but it may also have a different shape, e.g., a square, hexagon or other polygon. By performing at least two protrusions arranged on opposite sides of the spring member, at least minimal centering of the spring member during attachment to the first part is ensured, as well as the creation of a uniform pressure force for pressing the flexible projections to the gearing. The spring member may comprise, e.g., 4, 6 or 12 protrusions regularly arranged along the circumference of the spring member. The more protrusions the spring member comprises, the better the centering of the spring member and the uniform distribution of the pressure force on the flexible projections are ensured.

Preferably, one part from the first part and the second part comprises an element for transmitting torque from a gripping portion to the threaded connection, wherein the other part of the first part and the second part comprises the gripping portion for rotating this other part. With this element, the torque-limiting tightening device is adapted, e.g., for tightening a threaded joint, especially a screw joint, wherein the element for transmitting torque from the gripping portion to the threaded connection may comprise, e.g., an inner thread or an outer thread for connecting a screw or an opening for inserting a nut or inserting a screw head. The nut can be firmly connected to the part, e.g., by pressing it into the part. This element for transmitting torque from the gripping portion to the threaded connection may also be shaped as an n-point extension wrench (Allen). The axis of the element for transmitting torque may be identical to the axis of rotation, which is most advantageous for efficient transmission of torque, or the axis of the element for transmitting torque may deviate slightly from the axis of rotation, i.e., it may be, e.g., parallel to the axis of rotation and a few millimeters offset from the axis of rotation, or the axis of the element for transmitting torque may be offset from the axis of rotation, e.g., by 2 to 5 degrees.

The element for transmitting torque may be performed, e.g., in a shank connected to the first or second part. The other part of the first part and the second part, that is, the part not comprising the element for transmitting torque, comprises a gripping portion for rotating the other part relative to the part comprising the element for transmitting torque. The gripping portion may be, e.g., the outer circumferential wall of this other part, which can be grasped by hand and subsequently manually rotated by this other part relative to the part that comprises the element for transmitting torque. The gripping portion can be adapted in shape or otherwise for holding a rosette, a lever or other torque-limiting tool. With this element for transmitting torque, the torque-limiting tightening device is connected to the threaded connection being tightened during use, and by grasping the gripping portion with hand or a tool and then rotating the part with this gripping portion, the torque is transferred to the threaded connection being tightened. Both the threaded connection and the element for transmitting torque preferably lie in the axis of rotation of the torque-limiting tightening device, wherein the threaded connection may only be tightened to a threshold tightening torque, which is given by the pressure force of the spring member on the flexible projections engaging the gearing.

The torque-limiting tightening device preferably comprises a shank for transmitting torque, wherein the spring member comprises an opening for inserting the shank therein. Thus, the device comprises a shank in the axis of rotation, wherein this shank may comprise an inner thread or an outer thread for connecting a screw, an opening for inserting a nut or inserting a screw head, etc. The advantage of the shank is that the entire device can be adapted by the shank to the type of threaded connection being tightened, e.g., by the length or cross-section of the shank. The cross-section of the shank may have any shape, e.g., hexagon, square, etc. The shank can be rigidly connected to the first part or the second part, wherein the shank and the corresponding part may form a single constituent, or they may be firmly connected additionally. The opening for mounting over the shank is the central opening of the spring member, wherein other part of the first part and the second part, i.e., the part not comprising the shank, may also comprise this opening for mounting over the shank. When mounting the first or the second part and further the spring member onto the shank, this shank forms another fixing feature ensuring the relative position of the first part, the second part and the spring disk. The shank may therefore fulfill several functions at the same time: as a feature comprising an element for transmitting torque, as a connecting element of the first part, the second part and the spring disk, and further for bracing the spring member, especially bracing against the inner circumference of the spring member.

The shank may be firmly connected to the first part, wherein the spring member is braced against the shank. Thus, the first part comprises the shank, wherein both the second part and the spring member may comprise central openings, wherein first the second part and then the spring member can be mounted over the shank of the first part through the central opening. The spring member with the central opening can be braced against the shank of the first part along its entire inner circumference or only along a portion of its inner circumference. In this case, the gripping portion is located on the second part, wherein the second part with the gripping portion is rotatable relative to the first part. The advantage of the shank on the first part and bracing the spring member against the shank is that the overall dimensions of the spring member and thus the overall dimensions of the device can be smaller, wherein this small-sized device can be preferred, e.g., for applications requiring a low tightening torque threshold. The spring member is a key element of the whole device and may be made of very expensive materials, wherein reducing its size may significantly reduce costs.

The shank may be firmly connected to the second part, wherein the spring member is braced against the outer wall of the first part. Thus, the second part comprises a shank and the spring member may comprise a central opening, wherein the second part may be inserted into the first part and the spring member may subsequently be mounted over the shank of the second part through the central opening. The spring member may be braced against the outer wall of the first part along its entire outer circumference or only along a portion of its outer circumference. In this case, the gripping portion is placed on the first part, wherein the first part with the gripping portion is rotatable relative to the second part. The advantage of the shank on the second part and bracing the spring member against the outer wall of the first part is that the assembly force of the spring member is greater, since the spring member is braced on the outer circumference of the spring member, i.e., on a larger area compared to the inner circumference of the central opening. This arrangement may be preferred for applications requiring a higher tightening torque threshold.

The spring member is preferably a spring disk. A spring disk is a disk made of a flexible material, e.g., from a flexible metal sheet based on steel, brass or another alloy, or from a flexible and durable plastic or composite material. The spring disk is light and readily shaped or otherwise modified to be braced against the first part. Another advantage is the easy connection of the spring disk to the assembly of the first and the second parts, since pressing the spring disk and bracing it against the first part of the device requires a relatively small pressing force compared to other types of spring elements. Furthermore, the spring disk is relatively easy to pre-shape, e.g., in terms of the shape and size of the central opening or the shape of the protrusions on the inner or outer circumference of the spring disk. The shape of the spring disk can be ensured, e.g., in a punching press. Any type of spring member may be made from said materials.

The spring disk preferably comprises at least two radial cutouts dividing the edge of the spring disk into protrusions, wherein at least one protrusion is braced against the first part. The cutouts may be performed on the outer or inner circumferential edge of the spring disk, or on the inner and outer edge of the spring disk. The cutouts may have the same width along their entire length, or they may also be shaped, e.g., the width of the same cutout at the mouth of the cutout and at the bottom of the cutout may be different. Alternatively, each cutout may have a different length, but preferably these cutouts of different lengths are symmetrically distributed along the circumference of the spring disk. At the bottom of the cutout, which is the place farthest from the edge of the spring disk, which is divided into protrusions by this cutout, the width of the cutout may be the greatest. The length (or depth) of the cutout corresponds to the dimension of the cutout in the radial direction given by the axis of rotation, the width of the cutout corresponds to the dimension of the cutout in the direction perpendicular to the radial direction. The cutouts divide the circumferential edge of the spring disk into protrusions, wherein the portion of the spring disk without cutouts then, e.g., adjoins the flexible projections of the second part. The edges of cutouts and protrusions may be straight or rounded. Performing cutouts in the disk is a simple method of increasing the springiness of the portion of the spring disk intended to be braced against the first part, wherein the free end of such created protrusions of the spring disk may be more easily braced against the first part during the assembly of the device.

The spring disk preferably comprises a total of at least 6 radial cutouts. The advantage of dividing the spring disk by a larger number of cutouts, preferably at least six, is the uniform distribution of the pressure force along the entire circumference of the spring disk. This number is also preferred for performing cutouts and protrusions on the inner edge of the disk and for a shank with a hexagon-shaped cross-section, when it is possible to sink each free end of the protrusion into the respective wall of the hexagonal shank. The spring disk may also comprise more cutouts and protrusions, e.g., 12. The spring disk may also comprise two types of cutouts and two types of protrusions, wherein each two types of cutouts and protrusions regularly alternate with each other along the circumference of the spring disk.

Preferably, the depth of each cutout is less than or equal to 0.8 times the radius of the spring disk or less than or equal to 0.8 times the distance between the opening and the outer edge of the spring disk. The maximum depth of the cutout may limit the area of the disk, which is to be in contact with the flexible projections of the second part, as this area essentially affects the correct pressing of the flexible projections to the gearing. With greater depth of the cutout, the spring disk may already be too flexible and lack sufficient pressure force, or the protrusions may be easily deformed.

The spring disk preferably comprises centering protrusions for centering the spring disk relative to the axis of rotation, and further the spring disk comprises spring protrusions for bracing against the first part, wherein one centering protrusion and one shaped protrusion adjoin to each cutout. The spring disk therefore comprises two types of cutouts and two types of protrusions, which regularly alternate with each other along the circumference of the spring disk, wherein only the free end of the spring protrusions is braced against the first part. The spring disk comprises a minimum of two centering protrusions and two spring protrusions.

The first part and/or the second part preferably comprises a groove for bracing of the spring member. Bracing the spring member against the first part is ensured by means of a groove performed in the first part, wherein the spring member is sunk into this groove. The groove can be performed in advance, which is before assembling the torque-limiting tightening device, e.g., in the outer wall of the first part. If the first part comprises a shank, the groove can be performed into one or more walls along the circumference of the shank, wherein the spring member can subsequently be braced into this groove in the shank. Therefore, when assembling the device, the corresponding portion of the spring member is pressed and sunk into the groove. The groove can also be performed directly during assembling of the torque-limiting tightening device, e.g., by pressing portion of the body volume of the first part with a pressing head, wherein first the spring member is mounted over the assembly of the first part and the second part, and subsequently a pressed collar and a groove are formed by the pressing head in one step, because at the same time the groove with the sunk spring member is bounded by this pressed collar. The groove can be performed along the entire circumference of the relevant portion of the first part or only in selected portions. The advantage is that, by performing the groove, the place of bracing the spring member against the first part is precisely predetermined, and thus also the springing of the spring member. The groove can also be performed in the second part, wherein the groove in the first part serves to brace against the first part and the groove in the second part may serve as a defining means. The embodiment of the groove is particularly preferred in case of using a spring disk, wherein the entire inner or outer circumferential edge of the spring disk is braced into the groove or the free ends of the protrusions on the spring disk are braced into the groove.

The shortcomings of the solutions known from the state of the art are further removed to a certain extent by the assembly for attaching the object being carried to the vehicle carrier according to this invention, which comprises at least one carrier for attaching to the exterior of the vehicle, a threaded connection for connecting the object being carried to the carrier and at least one torque-limiting tightening device for tightening the threaded connection. The carrier is a beam structure being attached to the exterior of the vehicle, which comprises, e.g., crossbars and sidebars, and is used for attaching the object being carried to the vehicle, wherein the object being carried can be a roof box, roof basket, bike carrier or ski carrier, etc. The vehicle can be a passenger vehicle, residential vehicle, trailer, etc. The object being carried is connected to the carrier by a threaded connection, e.g., a screw connection, and a torque-limiting tightening device is connected to this threaded connection, wherein for connecting the torque-limiting tightening device to the threaded connection, the shank of the torque-limiting tightening device can preferably be used, especially if this shank comprises an element for transmitting torque, e.g., an inner or outer thread for connecting the screw, an opening for inserting a nut or for inserting a screw head, or if the shank is shaped as an n-point extension wrench (Allen). In other words, the shank or other portion of some part of the device is connected to the threaded connection being tightened (with a thread, screw head, nut, etc.). By connecting the threaded joint to a torque-limiting tightening device and subsequently rotating the part with the gripping portion, the threaded connection can hence be tightened to a predetermined threshold tightening torque, which is given by the pressure force of the spring member on the flexible projections engaging the gearing.

The application of the torque-limiting tightening device in the assembly for attaching the object to the carrier is preferred in terms of easy and safe attachment of the object to the carrier. The torque-limiting tightening device is, for example, screwed to the threaded connection via the inner thread in the shank, and therefore connected to the threaded connection by one part, wherein by simply grasping the gripping portion and manually turning the part not connected to the threaded connection, the threaded connection may be tightened to the optimal tightening torque. The use of tools may not be necessary for tightening, and at the same time the user knows exactly at which moment to stop tightening the threaded connection, as the user can also be immediately informed of reaching the tightening torque threshold by an acoustic signal, e.g., a strong click or clicking, which causes the movement of the flexible projections in the gearing when the first and the second parts slip. Optimal tightening eliminates both insufficient tightening of the joint and, conversely, excessive tightening, which may lead to thread stripping and damage to the threaded connection. Both insufficient and excessive tightening of the threaded connection is dangerous and could cause loosing the object being carried while driving.

Preferably, the first part and the second part do not rotate relative to each other when tightening the threaded connection until the tightening torque threshold is reached and when loosening the threaded connection and they rotate relative to each other when tightening the threaded connection after exceeding the tightening torque threshold. When tightening the threaded connection until the tightening torque threshold is reached or when loosening the threaded connection, the first part and the second part do not move relative to each other, since the flexible projections of the second part firmly engage the gearing of the first part, wherein the entire assembly of the first and the second part rotates around the axis of rotation. The torque induced by grasping the gripping portion and rotating the part with this portion is directly transmitted to the threaded connection, which is tightened or loosened by this torque. After exceeding the tightening torque threshold, it is not possible to further tighten the threaded connection, because at this moment the tightening force is too large, and instead of tightening the threaded connection, this force will cause the movement of the second part relative to the first part, which will start to slip relative to each other, wherein the ends of the flexible projections may move between the teeth of the gearing of the first part. This movement is preferably accompanied by a loud clicking, which alerts the user that the tightening torque threshold has been reached.

### Description of the Drawings

The summary of the invention is further explained by examples of its embodiments, which are described using accompanying drawings, where:
Fig. 1 Shows a view of a torque-limiting tightening device according to the first exemplary embodiment comprising a first part with a cylindrical shank and a spring disk with a central opening without cutouts and protrusions, in exploded position,
Fig. 2 Shows a cross-section of the torque-limiting tightening device according to the first exemplary embodiment before assembling the device using a pressing head,
Fig. 3 Shows a cross-section of the torque-limiting tightening device according to the first exemplary embodiment in the first stage of assembling the device,
Fig. 4a Shows a cross-section of the torque-limiting tightening device according to the first exemplary embodiment after assembling the device with bracing the spring disk into the shank,
Fig. 4b Shows a cross-section of a torque-limiting tightening device according to the first exemplary embodiment after assembling the device with bracing the spring disk into the shank, wherein the first (left) side of the cross-section shows the location of the pressing head above the inner radial protrusion and the second (right) side of the cross-section shows the location of the pressing head slightly offset from the inner radial protrusion towards the axis of rotation.
Fig. 5 Shows a view of a torque-limiting tightening device according to the second exemplary embodiment comprising the first part with a hexagonal shank and a spring disk with a central opening and with cutouts and protrusions on the inner edge of the spring disk, in exploded position,
Fig. 6 Shows a cross-section of the torque-limiting tightening device according to the first or the second exemplary embodiment after assembling the device with bracing the spring disk into the preformed groove in the shank,
Fig. 7 Shows a cross-section of a torque-limiting tightening device according to the first or the second exemplary embodiment after assembling the device by forming a pressed collar on the shank,
Fig. 8 Shows a view of a torque-limiting tightening device according to the third exemplary embodiment comprising a second part with a hexagonal shank and a spring disk with a central opening and with cutouts and both centering and spring protrusions on the outer edge of the spring disk, in exploded position,
Fig. 9 Shows a cross-section of the torque-limiting tightening device according to the third exemplary embodiment after assembling the device using a pressing head with bracing the spring disk into the outer wall of the first part,
Fig. 10 Shows a cross-section of the torque-limiting tightening device according to the third exemplary embodiment after assembling the device with bracing the spring disk into the preformed groove along the circumference of the outer wall of the first part,
Fig. 11a Shows a cross-section of a torque-limiting tightening device according to the third exemplary embodiment after assembling the device by bracing the spring disk into the preformed groove in the outer wall portion of the first part,
Fig. 11b Shows a cross-section of a torque-limiting tightening device according to the third exemplary embodiment after assembling the device by bracing the spring disk into the preformed groove in the outer wall portion of the first part,
Fig. 12 Shows a cross-section of an assembly for attaching an object being carried to a vehicle carrier according to this invention, wherein this assembly comprises a roof box attached to a crossbar by means of a clamping device and a torque-limiting tightening device.

### Exemplary Embodiments of the Invention

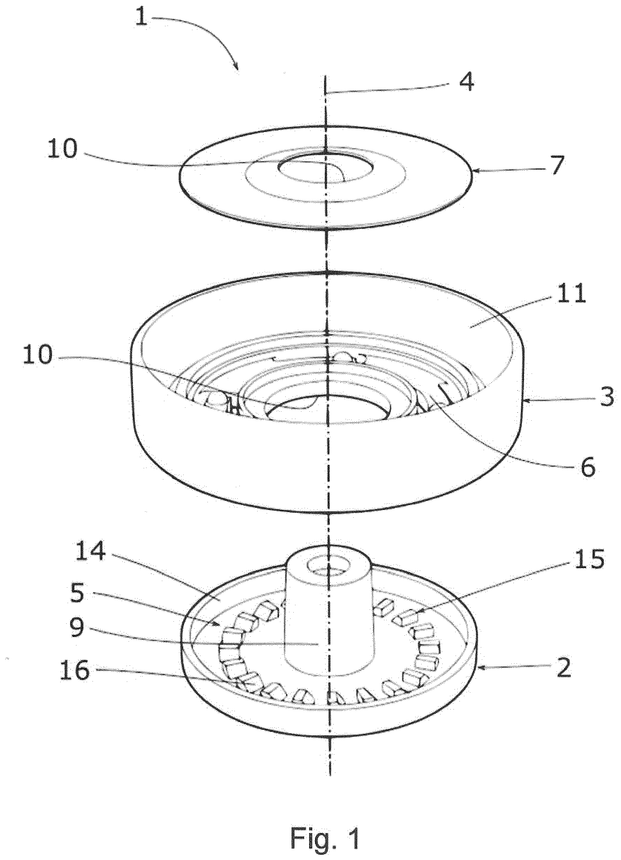

The invention will be further explained by exemplary embodiments with reference to the relevant drawings. One exemplary embodiment is a torque-limiting tightening device 1 comprising a first part 2 with a shank 9 and a spring member 7 as a spring disk with a central opening 10 without cutouts 12 and protrusions 8, wherein after assembling the device, the spring disk is braced by its inner edge against the shank 9, as shown in Fig. 1 to Fig. 4.

The first part 2, the second part 3 and the spring disk are shown in Fig. 1, wherein the first part 2 comprises a circular plate with a gearing 5 and a raised rim 14 along the circumference of the plate, wherein each tooth 15 of the gearing comprises an inclined surface 16 on one side thereof. A cylindrical shank 9 is connected to the first part 2 at the center of the plate, wherein the shank 9 is perpendicular to the plane of the plate and comprises a cavity, wherein a hexagonal nut with an inner thread 17 is pressed into the cavity. The second part 3 has a larger diameter than the plate of the first part 2, comprises a central opening 10 for mounting over the shank 9, and further comprises an outer wall 11, which serves as a gripping portion. The second part 3 comprises a first side 19 oriented to the first part 2 and a second side 20 oriented to the spring member 7, wherein the second part 3 comprises a defining groove 18 on the first side 19 for receiving the raised rim 14 of the first part. This defining groove 18 may extend along the entire circumference of the second part 3 and defines a rotational connection of the two parts about the axis 4 of rotation.

An outer radial protrusion 22 and an inner radial protrusion 21 are formed on the second side 20 of the second part 3, wherein the inner radial protrusion 21 is located closer to the axis 4 of rotation than the outer radial protrusion 22, and the second part 3 further comprises a total of four cantilevered flexible projections 6 located between the two radial protrusions. The flexible projections 6 lie in the plane of the plate of the first part 2 and are bounded by cutouts in this plate, thereby ensuring the flexibility of these flexible projections 6. The flexible projections 6 are shaped along their length into an arc, i.e., from the place of connection of the flexible projection 6 to the plate, each of these flexible projections 6 is curved towards its free end. Thus, all four flexible projections 6 lie on a common circle, wherein this circle follows the shape of the circle defining the location of the gearing 5. Each flexible projection 6 comprises two teeth at its free end, where one tooth on the flexible projection 6 is performed on the first side 19 of the second part, i.e., towards the first part 2, and the second tooth on the flexible projection 6 is performed on the second side 20 of the second part, towards the spring disk. The tooth on the flexible projection 6, which is located on the first side 19 of the second part, comprises an inclined surface 16, wherein this inclined surface 16 corresponds to the inclined surface 16 of the teeth on the gearing 5 of the first part. The inclined surfaces 16 of the teeth on the gearing 5 always rise in a counterclockwise direction (Fig. 1), wherein the inclined surfaces 16 of the teeth on the flexible projections 6 are oriented in the opposite direction to the inclined surfaces 16 of the teeth on the gearing 5 (not shown in the figure). Thus, the inclined surfaces 16 of both the gearing 5 and the flexible projections 6adjoin each other. The tooth on the flexible projection 6, which is located on the second side 20 of the second part, is rounded and has approximately the shape of a spherical segment, and the spring member 7 abuts on this rounded tooth.

Appended to the second side 20 of the second part is a spring member 7 with a central opening 10, which, like the second part 3, is mounted over the shank 9 of the first part. In the first exemplary embodiment, the spring disk is made of sheet metal, wherein the portion of the spring disk intended for bracing against the shank 9 is pre-shaped out of the plane of the spring disk. The central opening 10 of the spring disk is circular in shape and the cross-section of the central opening 10 is smaller than the cross-section of the shank 9, wherein after mounting and pressing of the disk over the shank 9, the inner edge of the spring disk is sunk into the wall of the shank 9. The outer diameter of the spring disk is smaller than the inner diameter of the outer radial protrusion 22, wherein this outer radial protrusion 22 is centering and serves to center the spring disk relative to the second part 3. The inner radial protrusion 21 is fixing and serves as a support for the spring disk during assembling of the torque-limiting tightening device 1, which is performed by pressing the spring disk onto the assembled first and second parts 2, 3 by means of the pressing head 24.

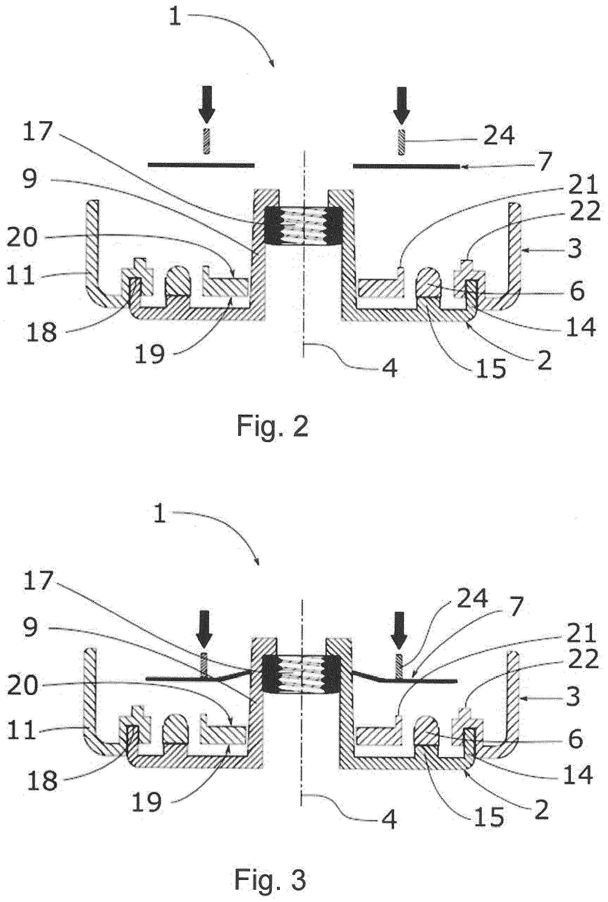

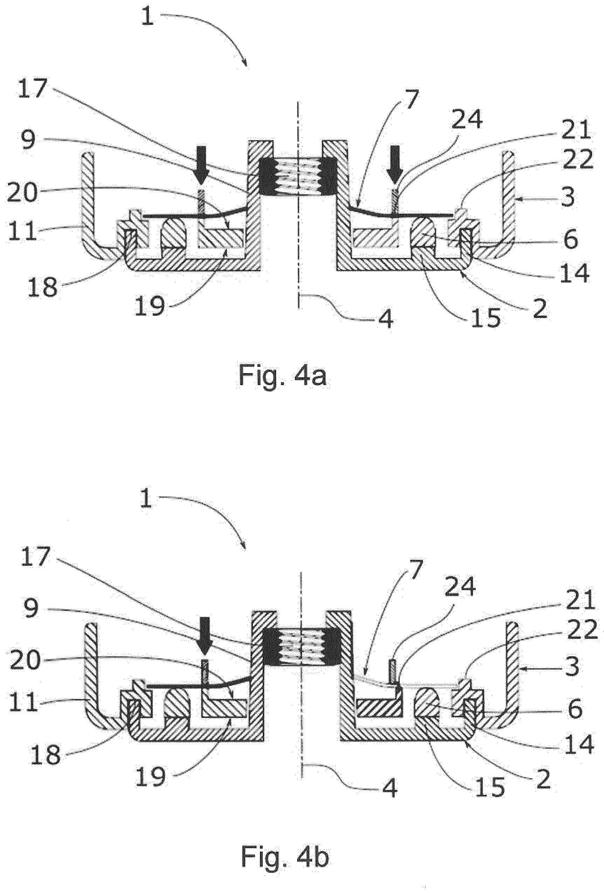

Assembling of the torque-limiting tightening device 1 in Fig. 2 to Fig. 4 is performed by means of a pressing head 24, wherein in the first exemplary embodiment the second part 3 is first mounted over the shank 9 of the first part so that the raised rim 14 of the first part engages the defining groove 18 of the second part, wherein a spring disk is subsequently placed on the rim of the shank 9. The spring disk is preferably centered relative to the first and the second part 2, 3 so that the disk engages the space between the outer radial protrusion 22 and the shank 9. The pressing head 24 is cylindrical in shape, wherein the circumference of the cylindrical pressing head 24 casing is preferably in axis with the inner radial protrusion 21 of the second part 3 (Fig. 2, Fig. 3, and Fig. 4a). The spring disk is pressed vertically downward by the pressing head 24 and pressed onto the first and the second part 2, 3 just at the place where the disk is supported by the inner radial protrusion 21. It can be seen that in the cross-section of the torque-limiting tightening device 1 after its assembling in Fig. 4a and Fig. 4b, the pre-shaped portion of the spring disk is deflected in a direction opposite to the direction of the pressing force, wherein the inner edge of the spring disk is elevated and firmly sunk into the wall of the shank 9 in this embodiment. The cross-section of the central opening 10 of the spring disk is smaller than the cross-section of the shank 9, wherein the inner edge of the spring disk scratches the wall of the shank 9 during pressing and thus forms a notch in the wall of the shank 9 , in which this inner edge remains sunk. The remaining part of the area of the spring disk, i.e., the non-pre-shaped part, adjoins the rounded teeth on the flexible projections 6.

Fig. 4b shows a comparison of the sinking of the spring disk in the case of placing the pressing head 24 directly over the inner radial protrusion 21 (in the left portion of the cross-section of the device 1) and in the case of a slight narrowing of the pressing head 24 towards the axis 4 of rotation (in the right portion of the cross-section of the device 1). If the spring disk is pressed onto the shank 9 by the pressing head 24 directly at the place of support by the inner radial protrusion 21, the inner edge of the spring disk is elevated and sunk into the shank 9, but after releasing of the pressing force, the elevated and sunk portion of the spring disk tends to return. If the pressing force acts closer to the axis 4 of rotation, i.e., the pressing head 24 is narrower, the inner edge of the spring disk may be sunk into the shank 9 with added preload and the bracing may be more reliable. However, in both cases, it is necessary to place the pressing head in one axis with the axis 4 of rotation for an even bracing of the spring disk against the shank 9. Thus, the pressing head 24 is supported by the inner radial protrusion 21 along its circumference when abutting on the spring disk (smaller force of bracing the spring disk) or the pressing head 24 is slightly offset from the inner radial protrusion 21 along its entire circumference towards the axis 4 of rotation (greater force of bracing the spring disk).

From the cross-section in Fig. 2 to Fig. 4 it can be seen that the shank 9 comprises a cavity open at both ends of the shank 9, wherein the inner thread 17 is located closer to the free end of the shank 9. In this exemplary embodiment, a hexagonal nut is pressed into the cavity of the shank 9, wherein the inner thread 17 is the thread of this nut. The inner thread 17 serves to screw in the screw or directly to screw onto the thread of the threaded connection, whereby the entire torque-limiting tightening device 1 is connected to the threaded connection being tightened. Thus, the first part 2 with shank 9 is intended for firm connecting to the threaded connection being tightened, wherein the first part 2 is oriented and connected to the screw connection being tightened by the free end of shank 9, and the second part 3 is rotatable relative to the first part 2. In this embodiment, the rotational movement of the second part 3 relative to the first part 2 is guided only by gripping the gripping portion by hand and manually rotating the second part 3. Gripping and rotating is easy and convenient since the entire outer wall 11 of the second part serves as the gripping portion.

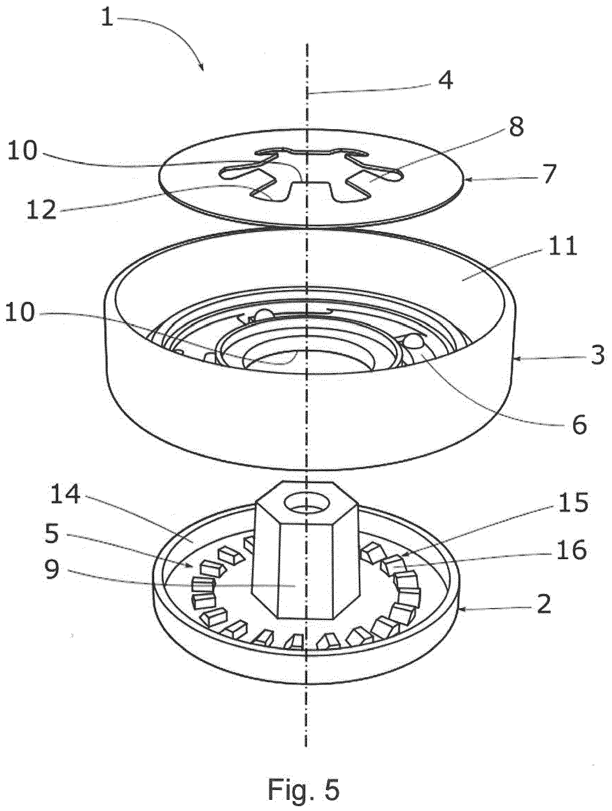

The second exemplary embodiment is a torque-limiting tightening device 1 comprising a first part 2 with a hexagonal shank 9 and a spring member 7 as a spring disk with a central opening 10, wherein the inner edge of the spring disk is divided into 6 protrusions 8 by the cutouts 12, and after assembling the device, the spring disk is braced by the free ends of the protrusions 8 against the shank 9, as shown in Fig. 5.

The first part 2 according to the first and the second exemplary embodiment differs only in shape of the shank 9, wherein in the second embodiment in Fig. 5 the shank 9 has a hexagonal cross-section. The embodiment of the second part 3 is identical to that of the first exemplary embodiment, wherein the second part 3 is mounted through its central opening 10 over the shank 9 and comprises a first side 19 oriented towards the first part 2 and a second side 20 oriented towards the spring member 7. A spring member 7 with a central opening 10 is appended to the second side 20 of the second part, which, like the second part 3, is mounted over the shank 9 of the first part 2. In the second exemplary embodiment, it is also a spring disk made of sheet metal, which comprises a total of 6 cutouts 12 regularly arranged around the inner edge of the spring disk. The central opening 10 of the spring disk is hexagonal in shape and corresponds to a cross-section of the shank 9, wherein the inner edge of the spring disk is divided by the 6 cutouts 12 into 6 protrusions 8, where the free end of each protrusion 8corresponds to one wall of the hexagonal shank 9. The width of the cutouts 12 is greatest at the bottom of the cutouts 12, wherein the edges of both protrusions 8 and cutouts 12 are rounded. The cross-section of the central opening 10 of the spring disk is smaller than the cross-section of the shank 9, wherein when mounting the disk over the shank 9, the free end of the protrusions 8 is sunk into the walls of the shank 9. In this embodiment, the depth of the cutouts 12 is approximately 0.4 times the distance between the central opening 10 and the outer edge of the spring disk, wherein this depth of the cutout 12 allows sufficient springing of the protrusions 8 and bracing the protrusions 8 against the wall of the shank 9. The remaining portion of the spring disk (not divided by the cutouts 12) is large enough for appending to the flexible projections 6 and for pressing the flexible projections 6 against the gearing 5.

The method of assembling the torque-limiting tightening device 1 according to the second exemplary embodiment is analogous to that of the first exemplary embodiment, wherein when appending the spring disk to the shank 9, it is necessary to ensure the correct orientation of the free ends of the protrusions 8 relative to the walls of the shank 9. After assembling the device 1, the free end of each protrusion 8 is braced into the corresponding wall of the shank 9. The connection of the device 1 to the threaded connection being tightened via the inner thread 17 and the screw, as well as the manual rotation of the second part 3 via the gripping portion, is analogous to the first exemplary embodiment.

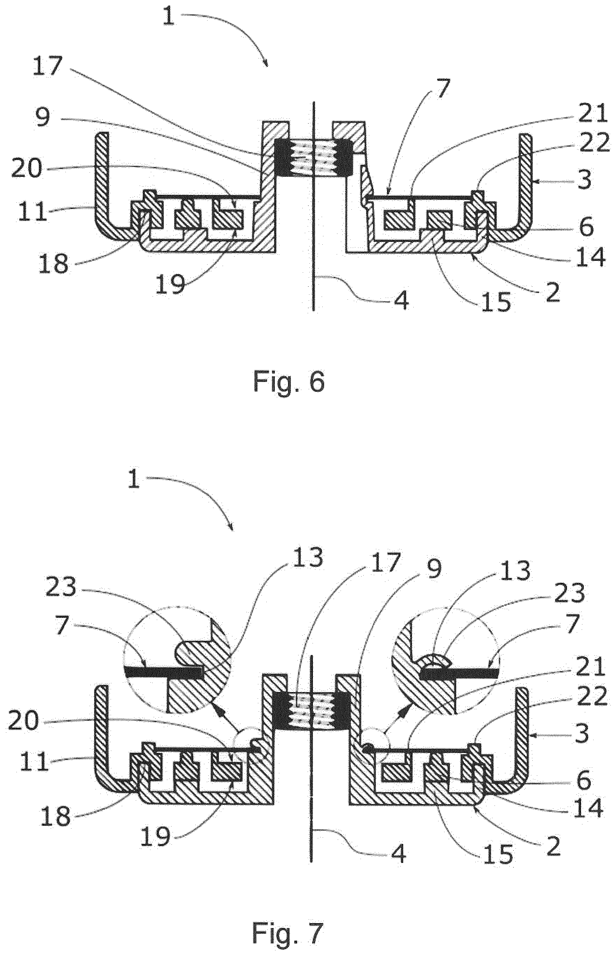

The first and the second embodiments may alternatively comprise a pre-performed groove 13 located on the shank 9, in Fig. 6 the groove 13 is only partially performed along the circumference of the shank 9. This groove 13 precisely defines the place of bracing the spring disk against the first part 2. In the groove 13, either the entire inner edge of the spring disk or only the free ends of the protrusions 8 on the spring disk may be braced.

The groove 13 around the circumference of the shank 9 may alternatively be performed directly during the process of assembling the device 1 according to the first and the second embodiments, which is shown in Fig. 7. In these alternative embodiments, the cross-section of the central opening 10 may be larger than the cross-section of the shank 9, wherein the spring disk is mounted over the shank 9 prior to being pressing and subsequently by the movement of the pressing head 24 both the groove 13 and the pressed collar 23 are formed, ensuring bracing the spring disk against the shank 9.

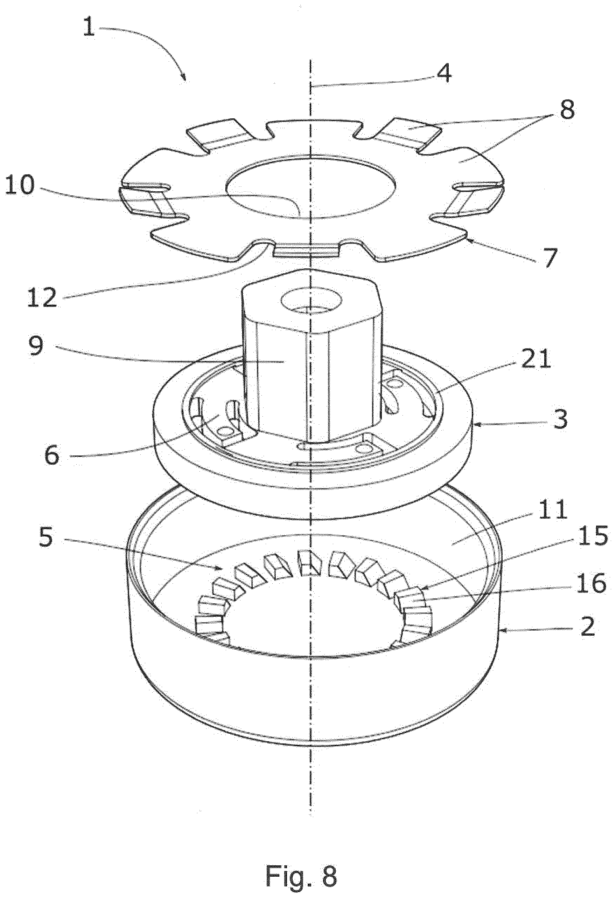

The third exemplary embodiment is a torque-limiting tightening device 1 comprising a second part 2 with a hexagonal shank and a spring member 7 as a spring disk with central opening 10**,** wherein the outer edge of the spring disk is divided by the cutouts 12 into centering protrusions 8 and spring protrusions 8. After assembling the device, the spring disk is braced by the free ends of the spring protrusions 8 against the outer wall 11 of the first part, as shown in Fig. 8 to Fig. 11.

The first part 2, the second part 3 and the spring disk are shown in Fig. 8, wherein the first part 2 comprises a circular plate with a gearing 6 and further comprises an outer wall 11 along the circumference of the plate, wherein this outer wall 11 serves as a gripping portion. The second part 3 comprises a plate with flexible cantilevered projections 6, wherein a shank 9 is connected to the second part 3 at the center of the plate and this plate of the second part 3 is intended for insertion into the space surrounded by the outer wall 11 of the first part. Thus, the diameter of the plate of the second part 3 is smaller than the diameter of the plate of the first part 2. The second part 3 in this embodiment comprises only an inner radial protrusion 21 formed on the second side 20 of the second part, wherein the embodiment of the flexible projections 6 is analogous to that of the first and the second exemplary embodiments. The embodiment of the shank 9 is analogous to that of the second exemplary embodiment.

A spring member with a central opening 10 is appended to the second side 20 of the second part, which is mounted over the shank 9 of the second part. In the third exemplary embodiment, the spring disk is a metal sheet disk, which comprises a total of 10 cutouts 12 arranged around the outer edge of the spring disk. The central opening 10 of the spring disk is circular and the diameter of this central opening 10 is larger than the largest radial dimension of the shank 9, wherein the spring disk is mounted over the shank 9 loosely. The spring disk in this embodiment includes 5 centering protrusions 8 and 5 spring protrusions 8, wherein one centering protrusion 8 and one spring protrusion 8 adjoins each cutout 12. The centering protrusion 8 is wider than the spring protrusion 8 and lies entirely in the plane of the spring disk, the spring protrusion 8 is longer than the centering protrusion 8, and the free end of the spring protrusion 8 is elevated in a direction opposite to the direction of the pressing force. The outer circumference of the spring disk defined by the free ends of the spring protrusions 8 is larger than the space bounded by the outer wall 11 of the first part. The width of the cutouts 12 of the spring disk in the third exemplary embodiment is smaller than in the second exemplary embodiment, wherein the depth of the cutouts 12 is equal to approximately 0.5 to 0.6 times the distance between the central opening 10 and the outer edge of the spring disk. Due to the smaller width of the cutouts 12 in this embodiment, this greater depth of the cutouts 12 will also ensure sufficient springing of the spring protrusions 8 and bracing the spring protrusions 8 against the outer wall 11 of the first part. The remaining portion of the spring disk (not divided by the cutouts 12) is large enough to be appended to the flexible projections 6 and for pressing the flexible projections 6 against the gearing 5.

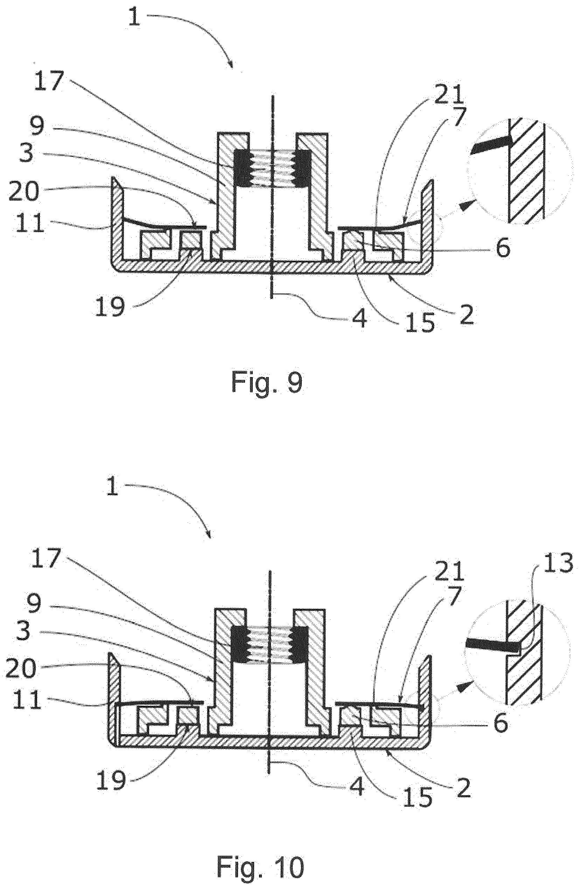

The assembling of the torque-limiting tightening device 1 according to the third exemplary embodiment is also performed by means of the pressing head 24, wherein in this embodiment a second part 3 is inserted into the first part 2 with the outer wall 11 so that the shank 9 of the second part is positioned in the axis 4 of rotation and the flexible projections 6 of the second part adjoin the gearing 5 of the first part. Subsequently, a spring disk is mounted over the shank 9. The spring disk is preferably centered relative to the first and the second parts 2, 3 by means of centering protrusions 8 so that the disk engages the space of the first part 2 between the outer edge of the first part 2 and the shank 9. The parameters and location of the pressing head 24 are analogous to those of the first exemplary embodiment. In the cross-section of the torque-limiting tightening device 1 after its assembling in Fig. 9, it can be seen that the spring protrusions 8 are bent in a direction opposite to the direction of acting of the pressing force, wherein the free end of all the spring protrusions 8 on the spring disk is elevated and firmly sunk into the outer wall 11 of the first part in this embodiment. The free end of each spring protrusion 8, when pressed, scratches the outer wall 11 of the first part, thereby forming a notch in the wall in which the free end remains sunk. The full portion of the spring disk, i.e., the portion not divided by the cutouts 12, adjoins the rounded teeth on the flexible projections 6.

From the cross-section in Fig. 9 to 11, it can be seen that the shank 9 comprises a cavity open at both ends of the shank 9, wherein the inner thread 17 is performed closer to the free end of the shank 9. As in the first and the second exemplary embodiments, this is a hexagonal nut pressed into the cavity of the shank 9. The inner thread 17 serves to screw in a screw, wherein the screw is used to connect the entire torque-limiting tightening device 1 to the threaded connection being tightened (the screw and the threaded connection being tightened are not shown in the figure). Thus, the second part 3 with the shank 9 is intended for firm connection to the threaded connection being tightened, wherein the second part 3 is oriented and connected to the screw connection being tightened by the free end of the shank 9, and the first part 2 is rotatable relative to the second part 3. In this embodiment, the rotational movement of the first part 2 relative to the second part 3 is guided only by grasping the gripping portion by hand and manually rotating the first part 2. Grasping and rotating is easy and convenient since the entire outer wall 11 of the first part serves as the gripping portion.

The third embodiment may alternatively include a pre-performed groove 13 in the outer wall 11 of the first part, which is shown in Fig. 10. With this groove 13, the place of bracing the spring disk against the first part 2 is precisely determined. Both the entire inner edge of the spring disk and only the free ends of the protrusions 8 on the spring disk can be braced in the groove 13.

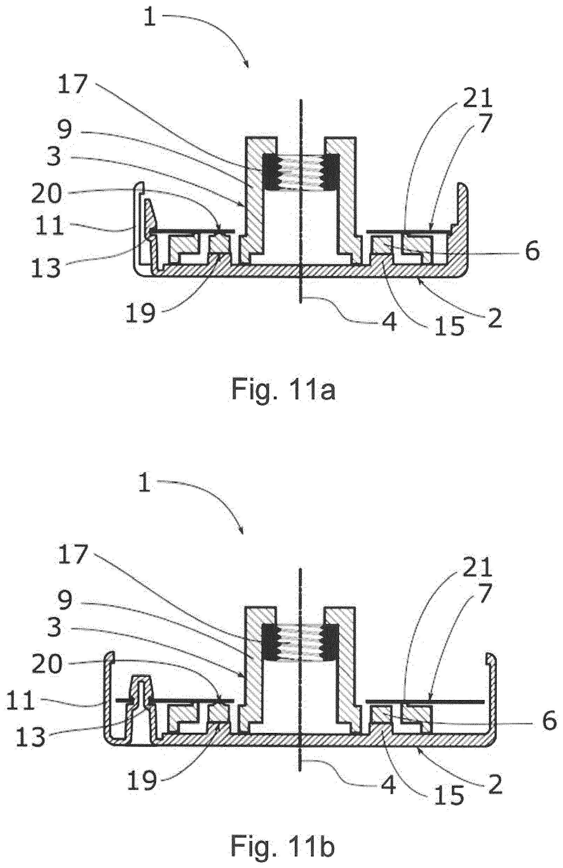

Further, the groove 13 in the outer wall 11 of the first part may alternatively be performed in only one place on the outer wall 11 of the first part, as shown in Fig. 11a. This wall forming with the groove 13 in Fig. 11a may also be performed at a few selected places on the outer wall 11 of the first part. In Fig. 11b, a corrugated outer wall 11 of the first part is shown, wherein the groove 13 is performed on both sides of this corrugation and the spring disk is sunk in the groove 13 on both sides of the corrugation. The corrugation may be a point corrugation, wherein the groove 13 is performed around the circumference of the point corrugation and the spring disk includes a small opening for mounting and sinking the groove 13 along the entire circumference of the point corrugation. The outer wall 11 of the first part may include more of such performed corrugations.

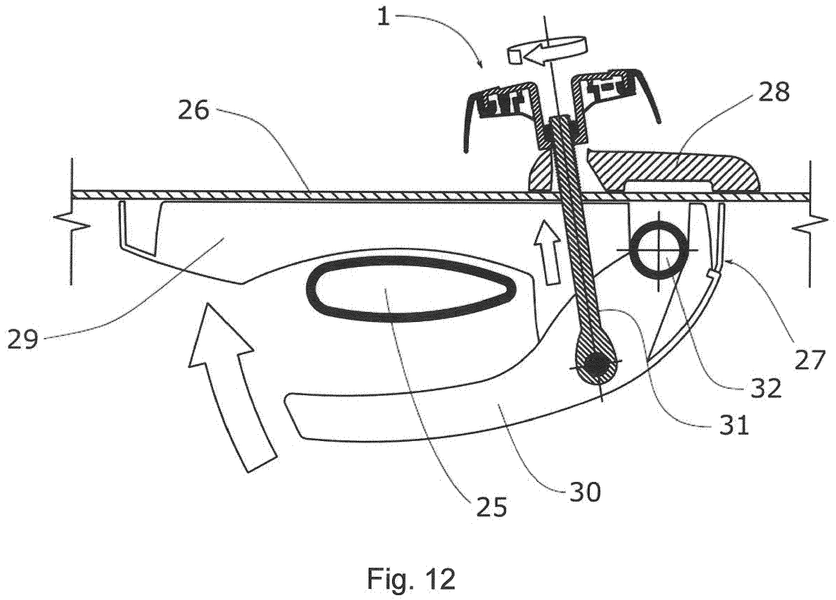

An assembly for attaching an object being carried to a vehicle carrier according to this invention comprises two carriers that are attached to the roof of the vehicle, e.g., sidebars oriented in the direction of travel of the vehicle or crossbars 25 oriented perpendicular to the direction of travel of the vehicle, and a roof box attachable to the carriers. The assembly further comprises a clamping device 27 for attaching the roof box to the carrier, wherein a torque-limiting tightening device 1 according to this invention is used for tightening of the clamping device 27. In the cross-section of Fig. 12, the clamping of the roof box to the crossbar 25 using the clamping device 27 is shown, wherein the clamping device 25 comprises an inner portion 28 of the clamping device and an outer portion 29 of the clamping device, where the inner portion 28 of the clamping device is disposed inside the roof box and the outer portion 29 of the clamping device is disposed outside the roof box. The outer portion 29 of the clamping device adjoins the upper surface of the crossbar 25, wherein a lever 30 is rotatably connected to the outer portion 29 of the clamping device by a rotary joint 32. The free arm of the lever 30 is located below the lower surface of the crossbar 25, so that rotation of the lever 30 around the rotary joint 32 causes the crossbar 25 to be clamped between the outer portion 29 of the clamping device and this lever 30. A special screw 31 is rotatably connected to the lever 30 (this connection is outside the rotary joint 32), wherein the special screw 31 passes through an opening in the wall 26 of the roof box and through an opening in the inner portion 28 of the clamping device. The free end of the screw 31 protrudes from the opening in the inner part 28 of the clamping device, wherein the torque-limiting tightening device 1 (according to the first exemplary embodiment) is screwed onto this free end by its inner thread 17. The torque-limiting tightening device 1 is thus, like the inner portion 28 of the clamping device, located inside the assembled roof box.

When tightening the threaded connection, the user grasps the gripping portion (in this embodiment, the gripping portion is located on the second part 3) and then tightens the threaded connection of the clamping device 27 by manually rotating the torque-limiting tightening device 1 about the axis 4 of rotation in the direction of the arrow. The torque is transmitted from the gripping portion to the threaded connection being tightened through the ratchet connection of the first part 2 with the second part 3 and subsequently through the firm connection of the first part 2 via the shank 9 and the inner thread 17 with the special screw 31. At this stage, the first and the second parts 2, 3 of the device do not rotate relative to each other, but the whole device 1 rotates, wherein the lever 30 of the clamping device moves towards the crossbar 25. When the tightening torque threshold is reached, the crossbar 25 is securely clamped between the lever 30 and the outer portion 29 of the clamping device. For further tightening, the force exerted to rotate the device 1 is already too great, causing the second part 3 to slip relative to the first part 2 (movement of the flexible projections 6 between the gearing 5). Thus, once the tightening torque threshold is reached, it is not possible to further tighten the threaded connection, to strip the thread, etc. The movement of the flexible projections 6 between the gearing 5 is accompanied by a loud click to alert the user that the tightening torque threshold has been reached. In the case of loosening the threaded connection, the same function of the device 1 is applied as in the case of tightening to the tightening torque threshold, i.e., the first and the second parts 2, 3 of the device do not rotate relative to each other, but the whole device 1 rotates, wherein the lever 30 of the clamping device moves away from the crossbar 25.

The torque-limiting tightening device 1 remains a permanent part of the whole assembly, wherein any above-mentioned embodiment of the device 1 is connected to the threaded connection being tightened via the inner thread 17 of the nut pressed into the shank 9. Thus, the part comprising the shank 9 is firm, wherein the part comprising the outer wall 11 as a gripping portion is rotatable. Grasping the gripping portion by hand causes the part with this gripping portion and the part with the shank 9 to rotate, wherein the first part 2 and the second part 3 do not rotate relative to each other when the threaded connection is being tightened until a tightening torque threshold is reached or when the threaded connection is being loosened. The flexible projections 6 of the second part firmly engage the gearing 5 of the first part, thereby causing rotation of the entire assembly of the first and the second parts 2, 3 about the axis 4 of rotation. The torque generated by the gripping portion and the rotation of the part with this portion is directly transmitted to the threaded connection, which is tightened or loosened by this torque. Once the tightening torque threshold has been exceeded, the threaded connection cannot be tightened any further, since at this point the tightening force is too great and instead of tightening the threaded connection, this force causes the second part 3 to move relative to the first part 2. The first and the second parts 2, 3 start to slip relative to each other, while the ends of the flexible projections 6 can move between the gearing teeth 15 of the first part 2.

The torque-limiting tightening device 1 according to this invention can advantageously also be used for assemblies comprising a carrier and a clamping device 27 for connecting a bicycle to the carrier.

### Industrial Applicability

The torque-limiting tightening device described above may be used for tightening of any threaded connections, e.g., for sports equipment such as bicycles, tent structures, for assembling furniture and others.

### List of Reference Numerals

| | | | |
|---|---|---|---|
| 1 - | torque-limiting tightening device | 18 - | defining groove |
| 2 - | first part | 19 - | first side of the second part |
| 3 - | second part | 20 - | second side of the second part |
| 4 - | axis of rotation | 21 - | inner radial protrusion |
| 5 - | gearing | 22 - | outer radial protrusion |
| 6 - | flexible projection | 23 - | collar |
| 7 - | spring member | 24 - | pressing head |
| 8 - | protrusion | 25 - | crossbar |
| 9 - | shank | 26 - | roof box wall |
| 10 - | opening | 27 - | clamping device |
| 11 - | outer wall | 28 - | inner portion of the clamping device |
| 12 - | cutout | | |
| 13 - | groove | 29 - | outer portion of the clamping device |
| 14 - | raised rim | | |
| | | 30 - | lever |
| 15 - | gearing tooth | 31 - | special screw |
| 16 - | inclined surface | 32 - | rotary joint |
| 17 - | inner thread | | |

## Claims

1. A torque-limiting tightening device (1) comprising a first part (2) and a second part (3), wherein the second part (3) is rotatably movable relative to the first part (1) about an axis (4) of rotation, wherein the first part (2) comprises a gearing (5) and the second part (3) comprises one or more flexible projections (6) engaging the gearing (5), wherein each tooth (15) of the gearing (5) and/or each flexible projection (6) comprises an inclined surface (16), wherein the torque-limiting tightening device (1) further comprises a spring member (7) for pressing at least one of the flexible projections (6) against the gearing (5), **characterized in that** the spring member (7) is braced against the first part (2) and the second part (3) for holding the first part (2) and the second part (3) together.

2. The torque-limiting tightening device (1) according to claim 1, **characterized in that** the spring member (7) comprises at least one protrusion (8) for bracing against the first part (2).

3. The torque-limiting tightening device (1) according to claim 1, **characterized in that** the spring member (7) comprises a total of at least two protrusions (8) for bracing against the first part (2), wherein the protrusions (8) are regularly arranged around the circumference of the spring member (7).

4. The torque-limiting tightening device (1) according to any one of claims 1 to 3, **characterized in that** one part from the first part (2) and the second part (3) comprises an element for transmitting torque from a gripping portion to a threaded connection, wherein the other part from the first part (2) and the second part (3) comprises the gripping portion for rotating this other part.

5. The torque-limiting tightening device (1) according to claim 4, **characterized in that** it comprises a shank (9) for transmitting torque, wherein the spring member (7) comprises an opening (10) for inserting the shank (9) therein.

6. The torque-limiting tightening device (1) according to any one of claims 4 to 5, **characterized in that** the shank (9) is firmly connected to the first part (2), wherein the spring member (7) is braced against the shank (9).

7. The torque-limiting tightening device (1) according to any one of claims 4 to 5, **characterized in that** the shank (9) is firmly connected to the second part (3), wherein the spring member (7) is braced against an outer wall (11) of the first part (2).

8. The torque-limiting tightening device (1) according to any one of claims 1 to 7, **characterized in that** the spring member (7) is a spring disk.

9. The torque-limiting tightening device (1) according to claim 8, **characterized in that** the spring disk comprises at least two radial cutouts (12) dividing the edge of the spring disk into protrusions (8), wherein at least one protrusion (8) is braced against the first part (2).

10. The torque-limiting tightening device (1) according to claim 9, **characterized in that** the spring disk comprises a total of at least 6 radial cutouts (12).

11. The torque-limiting tightening device (1) according to any one of claims 9 to 10, **characterized in that** the depth of each cutout (12) is less than or equal to 0.8 times the radius of the spring disk or less than or equal to 0.8 times the distance between the opening (10) and the outer edge of the spring disk.

12. The torque-limiting tightening device (1) according to any one of claims 9 to 11, **characterized in that** the spring disk includes centering protrusions (8) for centering the spring disk relative to the axis (4) of rotation, and further, the spring disk comprises spring protrusions (8) for bracing against the first part (2), wherein each cutout (11) is adjoined by one centering protrusion (8) and one spring protrusion (8).

13. The torque-limiting tightening device (1) according to any one of claims 1 to 12, **characterized in that** the first part (2) and/or the second part (3) comprises a groove (13) for bracing of the spring member (7).

14. An assembly for attaching an object being carried to a vehicle carrier, **characterized in that** it comprises at least one carrier for attaching to the exterior of the vehicle, a threaded connection for connecting the carried object to the carrier and at least one torque-limiting tightening device (1) according to any one of claims 1 to 13 for tightening the threaded connection.

15. The assembly according to claim 14, **characterized in that** the first part (2) and the second part (3) do not rotate relative to each other when tightening the threaded connection until a tightening torque threshold is reached and when loosening the threaded connection, and they rotate relative to each other when tightening the threaded connection after exceeding the tightening torque threshold.
